Europäisches Patentamt

European Patent Office

Office européen des brevets

(19)

(11) Publication number: **0 151 509**
A1

(12) ## EUROPEAN PATENT APPLICATION

(21) Application number: **85300071.9**

(22) Date of filing: **04.01.85**

(51) Int. Cl.⁴: **H 02 K 3/04**
**H 02 K 23/54, H 02 K 3/26**

(30) Priority: **05.01.84 ZA 840080**

(43) Date of publication of application:
**14.08.85** Bulletin **85/33**

(84) Designated Contracting States:
**CH DE FR GB LI**

(71) Applicant: SOUTH AFRICAN INVENTIONS
DEVELOPMENT CORPORATION
Administration Building Council for Scientific and
Industrial Research Scientia
Pretoria, Transvaal(ZA)

(72) Inventor: Van Niekerk, Hendrik Rudolph
52 Ysterhout Avenue Brummeria
Pretoria Transvaal(ZA)

(74) Representative: Jennings, Roy Alfred et al,
GILL JENNINGS & EVERY 53-64 Chancery Lane
London WC2A 1HN(GB)

(54) Disc-armature electric machines.

(57) An electric machine including a disc-like armature (C) having a winding comprising a plurality of coils (13) each composed of a plurality of juxtaposed conductors (16) formed to define a pair of circumferentially spaced, radially disposed coil side portions (14a, 14b). Radially disposed active portions of the conductors (16) constituting the coil side portions (14a, 14b) are located in close proximity to one another in a circumferential direction along substantially their entire radial extent. To accommodate the conductor portions radiating inwardly from an outward zone (19) to an inward zone (17) of the armature (C), the radially disposed coil side portions (14a, 14b) have cross-sectional configurations which change along their lengths such that their circumferential extent decreases and their axial extent increases inwardly from the outward zone (19) of armature (C). Radially disposed conductor portions may be transposed into axially superimposed relationship or may have changing cross-sectional configurations. The armature (C) may taper in thickness radially outwardly and may be rotatable in a wedge-shaped airgap (11) whose axial width decreases radially outwardly.

FIG 3

- 1 -

This invention relates to disc-armature electric machines.

It is known to provide a D.C. motor comprising a disc-like rotary armature which is rotatable about an axis disposed transversely to the disc and which comprises radially disposed conductors which radiate outwardly away from each other from an inward zone of the disc towards the outer periphery of the disc and are encapsulated in a rigid matrix of epoxy resin; and a stationary multi-polar, permanent-magnet field system producing an axially orientated magnetic field in an airgap of substantially uniform width in which the armature is rotatable.

Disc-armature D.C. motors of the type described above have certain advantages in the field of electric traction, such as in battery traction applications. Such a motor may be produced without any magnetic material in the rotary armature and has a high specific power output due to the use of a multi-polar permanent magnet field system and has a high operating efficiency due to low losses. Such a rotary disc-armature has a

0151509

relatively low moment of inertia and a good dynamic response which makes it suitable for computer and numerically controlled drives.

Disc-armature motors suffer from the disadvantage that the width of the airgap of substantially uniform width is relatively large as it comprises not only running clearances on opposite sides of the disc but also the thickness of the disc. Consequently sufficient permanent magnet material, which could be costly, has to be provided to produce the required working flux density in the airgap. In an effort to reduce the effective airgap, it has been suggested to introduce magnetic powder into the epoxy resin matrix encapsulating the rotor conductors. However this increases the cost of production of the armature and also increases hysteresis and eddy-current losses.

It is an object of the present invention to provide an improved disc-armature electric machine.

According to the invention an electric machine includes a disc-like armature including a winding comprising substantially radially disposed conductors or conductor portions which are located in close proximity to each other in a circumferential direction, at least certain of the radially disposed conductors or conductor portions and/or at least certain groups of the radially disposed conductors or conductor portions having cross-sectional configurations which change along their lengths such that their circumferential extent decreases and their axial extent increases from a radially outward zone of the armature towards a radially inward zone of the armature; and a magnetic field system adapted to produce a magnetic field, the disc-like armature and the magnetic field being relatively rotatable.

For the purposes of this specification the terms "circumferential", "radial" and "axial" signify orientations relative to the disc-like armature.

At least certain of the radially disposed conductors or conductor portions may be transposed into an axially superimposed relationship inwardly from the outward zone of the disc-like armature, whereby the overall extent of radially disposed conductors or conductor portions in an axial direction increases inwardly from the outward zone of the disc-like armature.

At least certain of the radially disposed conductors or conductor portions belonging to a group may be transposed into an axially superimposed relationship inwardly from the outward zone of the armature, whereby the circumferential extent of the group of radially disposed conductors or conductor portions decreases and their axial extent increases from the outward zone towards the inward zone of the armature.

The group of radially disposed conductors or conductor portions may consitute at least part of a coil of the armature winding.

With a conventional disc-armature motor as described above, the radially disposed conductors are normally located in close proximity to one another in a circumferential direction in an inwardzone of the disc and radiate outwardly away from each other towards the outer periphery of the disc so that at the outer periphery adjacent conductors are spaced apart circumferentially. With the arrangement according to the invention the radially disposed conductors or conductor portions may be located in close proximity to one another in a circumferential direction in an outward zone of the disc-like armature. In order to accommodate the radially disposed conductors or conductor portions as they radiate inwards towards the axis of the disc-like armature, at least certain of the conductors or conductor portions may be transposed into an axially superimposed relationship and/or may have a cross-section which decreases in circumferential extent but increases in axial extent. It will be appreciated that the overall thickness of radially disposed conductors or conductor portions in an axial direction increases inwardly from the outward zone of the disc towards an inward zone of the disc. The radially disposed conductors or conductor portions may be located in close proximity to each other along substantially their entire radial extent.

With the arrangement according to the invention, the conductors or conductor portions may be located side-by-side in substantially abutting relationship in a circumferential direction along substantially their entire radial extent and may be separated from one another only by their insulation.

In the outward zone of the disc-like armature the conductors or conductor portions may be located in close proximity to one another in a single layer.

It is also possible for the conductors or conductor portions to be arranged in two or more layers in the outward zone of the disc-like armature, the conductors or conductor portions of each layer being located in close proximity to one another in a circumferential direction.

The armature winding may comprise a plurality of coils, each coil having a pair of circumferentially spaced, substantially radially disposed portions, at least certain of the radially disposed coil portions having cross-sectional configurations which change along their lengths such that their circumferential extent decreases and their axial extent increases from a radially outward zone of the armature towards a radially inward zone of the armature.

The armature winding may comprise a plurality of single or multi-turn coils, each coil including a pair of circum- ferentially spaced, radially disposed portions and each radially disposed coil portion comprising at least one radially disposed conductor or conductor portion.

A coil may be constituted by a single conductor formed to provide one or more turns and having a cross-sectional area to suit the required current carrying capacity of the coil.

However, in order to minimize eddy current losses in the armature winding, it is preferable for a coil to comprise a plurality of juxtaposed conductors which may be formed to provide one or more turns, at least certain of the conductors of each radially disposed coil portion being transposed into an axially superimposed relationship inwardly of the outward zone of the armature.

The juxtaposed conductors of each coil may be of relatively small cross-sectional area, the number of juxtaposed conductors and the cross-sectional areas of the individual conductors being related to provide a predetermined total conductor cross-sectional area to suit the required current carrying capacity of the coil.

With the arrangement of the two preceding paragraphs a composite coil comprising a plurality of juxtaposed conductors is provided.

Each of the juxtaposed conductors of a composite coil may be provided with a surface-coating of insulating material and each composite coil may be enclosed in an insulating sheath.

Stray load losses may present a problem in machines with low resistivity magnetic material, such as in machines with electro-magnetic field systems. In order to minimize stray load losses, it is preferable for the radially disposed portions of the coils to have substantially rectangular cross-sectional configurations and for radially disposed coil portions to be located side-by-side in close proximity to one another in a circumferential direction along substantially the entire radial extent of the radially disposed coil portions.

In a preferred embodiment of the invention the armature winding comprises a plurality of composite coils each comprising a plurality of juxtaposed conductors of round cross-sectional configuration, the conductors being juxtaposed to define radially disposed coil portions of generally rectangular cross-sectional configuration.

With the arrangement of the preceding paragraph the conductors of each radially disposed coil portion may be juxtaposed in such a manner that the sides of the rectangular cross-section extend substantially in circumferentially and axially disposed directions, at least certain of the conductors of each radially disposed coil portion being transposed into an axially superimposed relationship inwardly of the outward zone of the disc-like armature, whereby the circumferential extent of the rectangular cross-section decreases and the axial extent of the rectangular cross-section increases inwardly from the outward zone of the armature.

It will be appreciated that the juxtaposed conductors of each radially disposed coil portion comprises a group of radially disposed conductor portions having a cross-sectional configuration which changes along the length of the coil portion such that the circumferential extent of the group decreases and the axial extent of the group increases from a radially outward zone towards a radially inward zone of the armature, whereby the overall extent of radially disposed conductor portions in an axial direction increases inwardly from the outer periphery of the disc-like armature.

The disc-like armature may be located in an airgap between a pair of opposed faces of magnetic material.

The magnetic face on each side of the disc may be substantially parallel to the corresponding side of the disc.

In one embodiment of the invention, the disc-like armature may be arranged to taper in thickness in a radially outward direction and the axial width of the airgap may decrease correspondingly in a radially outward direction. In other words, the axial thickness of the disc-like armature may increase in a radially inward direction from the outward zone towards the inward zone of the disc. With this arrangement the axial width of the airgap may increase correspondingly in a radially inward direction so that the airgap is wedge-shaped.

With the embodiment described in the previous paragraph, a consistently high space factor may be obtained for the disc-like armature in the airgap from the outward to the inward zones of the armature in contrast with conventional machines in which the space factor varies from a high value at the inward zone of the disc armature to a lower value at the outer zone of the disc armature where adjacent conductors are spaced apart circumferentially.

For the purposes of this specification the term "space factor" means the ratio of the total cross-sectional area of the radially disposed armature conductors or conductor portions to the total cross-sectional area of the airgap transversely to the radially disposed armature conductors or conductor portions at any particular radius.

In another embodiment of the invention, the disc-like armature may be substantially parallel sided and the opposed magnetic faces defining the airgap may also be substantially parallel to each other. With this arrangement an airgap of substantially uniform width may be provided.

The arrangement of the previous paragraph may be achieved by providing an annular magnetic core which tapers inwardly from an outward zone towards an inward zone of the disc-like armature; and locating radially disposed conductors or conductor portions in close proximity to one another in a circumferential direction on each side of the annular core, the overall extent in an axial direction of the radially disposed conductors or conductor portions on at least one side of the annular core increasing inwardly from the outward zone of the armature towards the inwardzone of the armature and the inward taper of the annular core being related to the radially inward increase in the axial extent of the conductors or conductor portions to provide a substantially parallel sided disc.

The winding of the disc-like armature may be produced in any suitable manner, such as by using pre-formed coils or by the continuous winding of a succession of coils or by printed circuit techniques.

The winding of the disc-like armature may be encapsulated in a rigid matrix of epoxy resin or in any other suitable encapsulating material.

The matrix may include magnetic powder.

The magnetic field system may comprise a multi-polar system.

The magnetic field system may comprise permanent magnets or electro-magnets.

The invention is applicable to DC motors and generators and also to single phase and multi-phase AC motors, generators and alternators.

The field system may be adapted to rotate while the disc-like armature may be adapted either to be stationary or also to rotate. Preferably the field system is adapted to be stationary while the disc-like armature is adapted to rotate. A stationary field system may be adapted to produce a rotating magnetic field.

It will be appreciated that the disc-like armature and the field system should be suitably related to produce the required electromagnetic coupling for the operation of the machine.

For a clear understanding of the invention preferred embodiments will now be described purely by way of example with reference to the accompanying drawings in which:-

Figure 1 is a diagrammatic, half sectional side view of an embodiment of a disc-armature D.C. machine according to the invention in which a disc-like armature which tapers in thickness is located in an airgap which tapers in width.

Figure 2 is a fragmentary and diagrammatic sectional view to an enlarged scale of the machine of figure 1 illustrating the disc-armature and airgap arrangement more clearly.

Figure 3 is a fragmentary and diagrammatic perspective view to an enlarged scale of the disc-like armature of the machine of figures 1 and 2 incorporating preformed composite coils.

Figure 4 is a section on the line IV-IV in figure 1 illustrating the multi-polar, electro-magnetic field armature.

Figure 5 is a fragmentary and diagrammatic sectional view on the line V-V in figure 3 illustrating the juxtaposition in close proximity to each other in a circumferential direction of radially disposed active coil portions in a zone located towards the outer periphery of the armature.

Figure 6 is a diagrammatic and fragmentary perspective view in section between the lines VI-VI and V-V in figure 3 of radially disposed active portions of composite coils which each comprises a plurality of juxtaposed conductors, illustrating the transposition of the radially disposed active conductor portions from the zone of the outer periphery of the armature towards a radially inward zone.

Figure 7 is a diagrammatic radial sectional view of an alternative arrangement of a disc-like armature of uniform thickness located in an airgap of uniform width.

Figure 8 is a diagrammatic axial view of another arrangement of a disc-like armature according to the invention, illustrating the continuous winding of a succession of composite coils.

Figure 9 is a diagrammatic and fragmentary half sectional side view of a D.C. machine according to the invention incorporating the disc-like armature of figure 8.

Figure 10 is a diagrammatic and fragmentary sectional perspective view similar to that of figure 6, illustrating radially disposed active conductor portions of composite construction produced by printed circuit techniques.

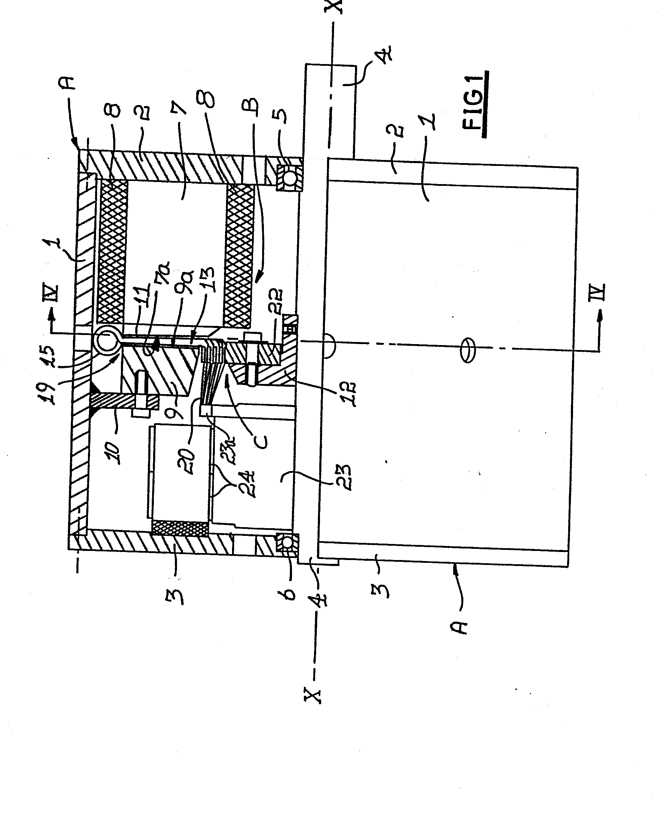

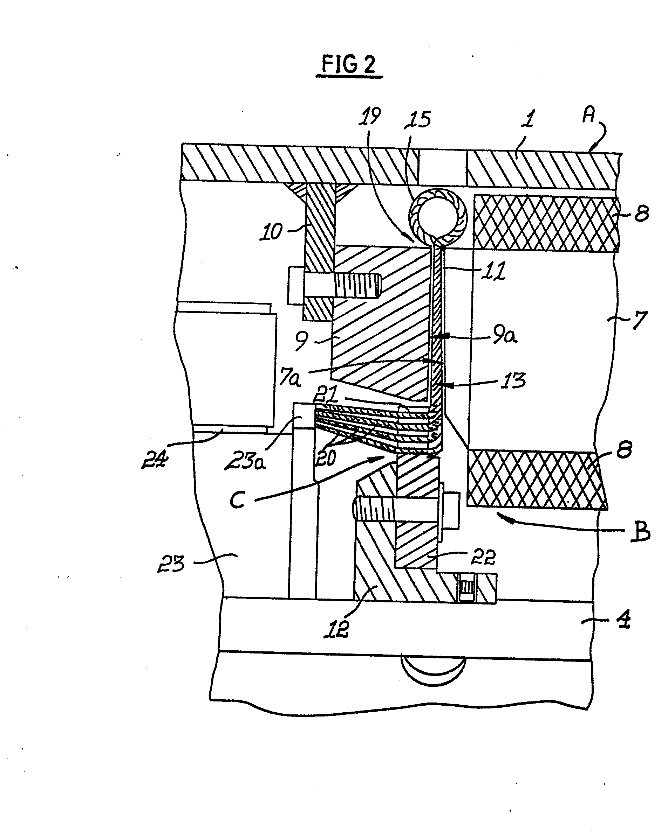

Referring first to figures 1 and 2, the D.C. machine comprises a casing A comprising a tubular enclosure 1 of aluminium; a soft steel end plate 2 which is removably bolted on to one end of tubular enclosure 1 and is rotatably mounted on shaft 4 by means of bearing 5; and an end plate 3 of aluminium which is removably bolted on to the other end of tubular enclosure 1 and is rotatably mounted on shaft 4 by means of bearing 6.

A multi-pole, electro-magnetic field system B is mounted on casing A in the interior thereof. As shown in figures 1, 2 and 4, field system B comprises a set of eight circumferentially spaced pole pieces 7 of suitable soft magnetic material which are bolted to the soft steel end plate 2. A field winding 8 is wound round each pole piece 7. The soft steel end plate 2 constitutes a flux ring connecting the pole pieces 7 together.

Field system B further includes an annular flux ring 9 of soft steel which is bolted to an annular mounting member 10 which is fast with the inner periphery of tubular enclosure 1. The face 9a of flux ring 9 is spaced from the pole faces 7a of the pole pieces 7 to define an annular airgap 11. When field windings 8 are energized the field system B produces in airgap 11 a magnetic field which is orientated axially relative to shaft 4.

The machine further includes disc-like, rotary armature C of annular formation which is mounted on shaft 4 for rotation therewith. Armature C is bolted to hub 12 which is secured to shaft 4 for rotation therewith. As shown in figures 1 and 2, armature C is located in airgap 11 between pole pieces 7 and flux ring 9. The disc-like armature C is rotatable in its own plane about the transversely disposed axis X-X of shaft 4 which is also the axis of the disc-like armature C.

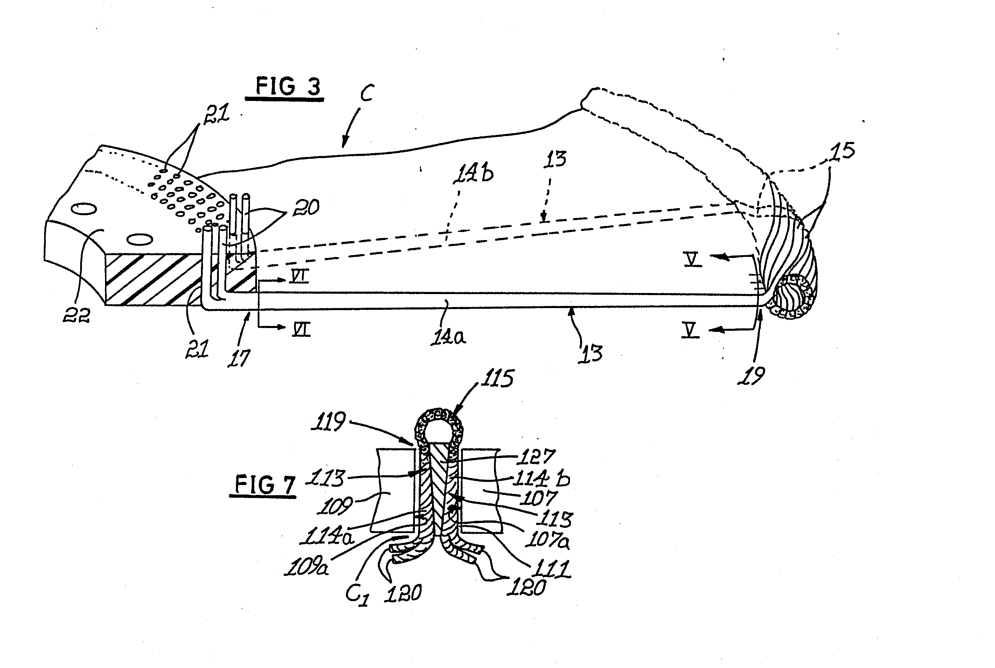

As shown in greater detail in figures 3, 5 and 6, armature C comprises a winding comprising a plurality of substantially U-shaped and preformed, single turn coils 13 which are nested together to form a relatively thin annular disc. Each U-shaped coil 13 presents a pair of radially disposed active side portions 14a and 14b which are located on opposite sides of the coil in circumferentially spaced relationship and which are joined together at their outer ends by a circumferentially extending outer connecting portion 15.

Both radially disposed active side portions 14a and 14b of all the coils 13 lie in a substantially common plane.

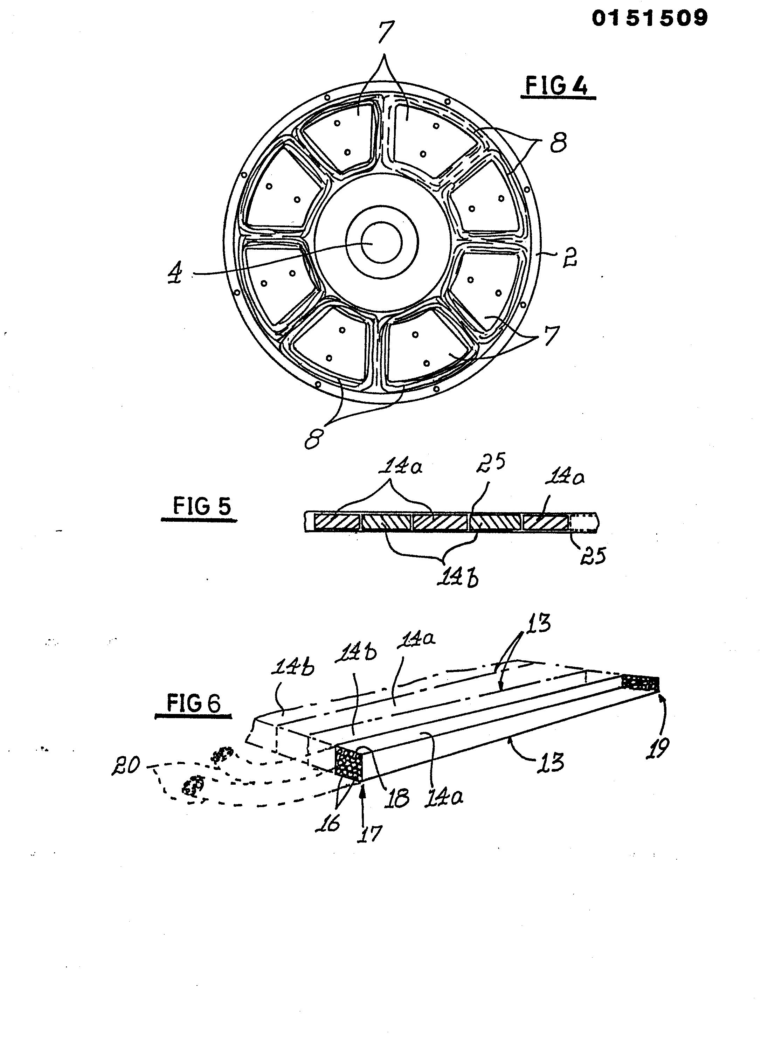

The coils 13 are assembled in such a manner that circumferentially round the disc radially disposed side portions 14a located on one side of the coils alternate with radially disposed side portions 14b located on the opposite side of the coils. In other words, as shown in figures 5 and 6 each radially disposed side portion 14a is located between a pair of radially disposed side portions 14b and similarly each radially disposed side portion 14b is located between a pair of radially disposed side portions 14a.

As shown diagrammatically in figure 6, each U-shaped coil 13 is of composite construction and comprises a plurality of conductors 16 of round cross-sectional configuration which are juxtaposed to define radially disposed coil side portions 14a and 14b of generally rectangular cross- sectional configuration, the sides of the rectangles extending substantially in circumferentially and axially disposed directions. Each conductor 16 is coated with insulating material to insulate it from adjacent conductors 16. Each composite coil 13 may be enclosed in its own insulating sheath 18 to insulate adjacent composite coils 13 from one another.

In a circumferential direction the radially disposed coil side portions 14a, 14b of the coils 13 are located side-by-side in edge-to-edge relationship and in close proximity to one another in substantially abutting relationship, along substantially the entire radial extent of the coil side portions 14a, 14b between zones 17 and 19, as can be seen from figure 6. In the circumferential zone 19 at the outer ends of the active coil side portions 14a, 14b (i.e. in the region of the outer periphery of disc-like armature C) radially disposed active portions of the conductors 16 of each composite coil 13 are arranged in a plurality of circumferentially extending layers which are stacked in an axial direction so that the rectangular cross-sections of the radially disposed active coil portions 14a, 14b are somewhat elongated in a circumferential direction.

In order to accommodate the conductors 16 along the coil side portions 14a, 14b as the latter radiate inwards from the outer peripheral region of the disc-like armature C towards the axis of the armature C, the radially disposed active portions of at least certain of the conductors 16 of each side portion 14a, 14b of each coil 13 are transposed into an axially superimposed relationship inwardly of zone 19 while other active conductor portions remain circumferentially next to one another so that the circumferential extent of the rectangular cross-section of the coil side portions 14a, 14b decreases and the axial extent of the rectangularcross-section of the coil side portions 14a, 14b increases inwardly from outward zone 19 towards inward zone 17. Along substantially the entire radial extent of the coil side portions 14a, 14b between zones 17 and 19, radially disposed active conductor portions are located in close proximity to one another in a circumferential direction.

As can be seen in figures 1, 2 and 6, the overall axial extent of the radially disposed active portions of conductors 16 and hence the axial thickness of disc-like armature C increases radially inwardly from zone 19 in the region of the outer periphery of disc C towards zone 17 in the region of the inner periphery of disc C. In other words the disc-like armature tapers in thickness in a radially outward direction.

In order to keep the width of airgap 11 as small as possible, each magnetic face 7a, 9a on each side of the disc-like armature C is substantially parallel to the corresponding side of the disc with a suitable running clearance on each side of the disc. As a result the axial width of airgap 11 increases radially inwardly in correspondence with the increase in axial thickness of the disc-like armature C. In other words, the airgap tapers in width in a radially outward direction. A hyperbolically curved taper is theoretically ideal, but a linear taper is a practical solution.

The inner ends 20 of the U-shaped coils 13 are threaded through passages 21 in an annular mounting disc 22 of insulating material and the radially disposed active conductor portions 14a, 14b and also the peripheral connecting portions 15 of the coils 13 are encapsulated in epoxy resin which is integrated with mounting disc 22 to form a rigid and mechanically strong disc unit without any magnetic material being present in armature C. The encapsulating expoxy resin is indicated by reference numeral 25 in figure 5.

The mounting disc 22 is bolted to hub 12 on shaft 4 and the inner ends 20 of the coils 13 are connected to the segments 23a of commutator 23 which is mounted on shaft 4 for rotation therewith. If the machine is to be operated as a d.c. motor, the field windings 8 of field system B may be suitably energized in conventional manner and d.c. current may be supplied to the coils 13 from stationary brushes 24 via commutator 23 in conventional manner, thereby to cause rotation of armature C in the airgap 11 presented by the stationary field system B. If the machine is to be operated as a d.c. generator, the field windings 8 of field system B may be suitably energized in conventional manner and disc-like armature C may be rotatably driven in any suitable manner, d.c. current from coils 13 being taken off from stationary brushes 24 in conventional manner.

With a conventional disc-armature machine, the radially disposed active conductors are located in close proximity to one another in a circumferential direction in an inward zone of the disc and radiate outwardly away from each other towards the outer periphery of the disc so that at the outer periphery adjacent conductors are spaced apart circumferentially. The disc has a substantially uniform thickness and is rotatable in a parallel sided airgap of substantially uniform width.

With a conventional disc-armature machine the maximum conductor cross-sectional area is determined at the radially inward ends of the active conductors which may be regarded as the "bottle neck" in the design, whereas in a machine according to the invention much more active conductor cross-sectional area is available in the disc-armature. The conductor "space factor" of a conventional machine varies from a maximum value at the inner ends of the active conductors to a lower value at their outer ends, whereas with a machine according to the invention the "space factor" remains high throughout.

The voltage developed in a conductor moving through a magnetic field in an airgap is proportional to the speed of travel of the conductor and the flux density in the airgap. With equal flux densities at the outer ends of the active conductors and equal speeds of travel, the voltage per conductor developed in a conventional machine with an airgap of uniform width will be higher than the voltage per conductor developed in a machine according to the invention in which the width of the airgap increases and the flux density decreases in a radially inward direction. Under the same working conditions a machine according to the invention will develop a lower voltage per active conductor than the conventional machine, but the resistance of the machineaccording to the invention will be lower than that of the conventional machine. The former characteristic is a disadvantage of the machine according to the invention whereas the latter characteristic is an advantage. These two characteristics thus have opposing effects but as most of the power is developed towards the outer periphery of the disc where the speed of travel through the magnetic field is highest, the adverse effect of a slightly lower voltage per active conductor is much less than the advantage of a much lower resistance.

Typical results of a comparison between a conventional disc-armature machine with an airgap of uniform width and a machine according to the invention as described above with reference to figures 1 to 6 and having an airgap that increases in width in a radially inward direction, are given in the following table:-

## TABLE

| Item | Conventional Machine | Machine according to invention |
|---|---|---|
| Radius at outer ends of active conductors (m) | 0,13 | 0,13 |
| Radius at inner ends of active conductors (m) | 0,075 | 0,075 |
| Airgap width - outer (mm) | 4 | 4 |
| Airgap width - inner (mm) | 4 | 5,6 |
| Speed (r.p.m.) | 3000 | 3000 |
| Flux density (outer) (Tesla) | 1 | 1 |
| Flux density (inner) (Tesla) | 1 | 0,714 |
| Voltage per active conductor (Volt) | 1,769 | 1,52 |
| Relative voltage ($V_r$) | 1 | 0,859 |
| Relative resistance ($R_r$) | 1 | 0,577 |
| Merit factor ($V^2_r/R_r$) | 1 | 1,278 |

NOTE:  In this comparison the merit factor represents the capability of the machine to develop power.

The machine according to the invention has 27,8% more output power potential than the conventional machine. The increase in mass of the machine according to the invention is very small, if at all significant. It is believed that with the invention less expensive machines with higher watt/kg ratios may be obtained.

With a conventional disc-armature machine with low-resistivity pole material, such as soft steel, stray load losses occur due to a magnetic flux ripple that is produced by a deformation of the magnetic field due to the circumferential spacing between the outwardly radiating current carrying conductors of the conventional disc-like armature in the radially outward zone of the disc. With a disc-like armature according to the invention such a flux ripple and the resultant stray load losses may be reduced by the location of the active conductors in close proximity to each other in a circumferential direction round the entire circumference of the disc and along substantially the entire radial extent of the airgap. The flux ripple and the resultant stray load losses may be reduced to a minimum by locating active conductors of generally rectangular cross-sectional configuration in substantially abutting relationship in the manner illustrated in figures 5 and 6. A substantially continuous array of conductive material may be obtained round the entire circumference of the disc and along the entire radial extent of the airgap.

It will be appreciated that many variations in detail are possible without departing from the scope of the appended claims. For example, instead of providing an airgap 11 as shown in figures 1 and 2 which increases in width in a radially inward direction, the opposed magnetic faces defining the airgap may be parallel to each other to provide an airgap of uniform width.

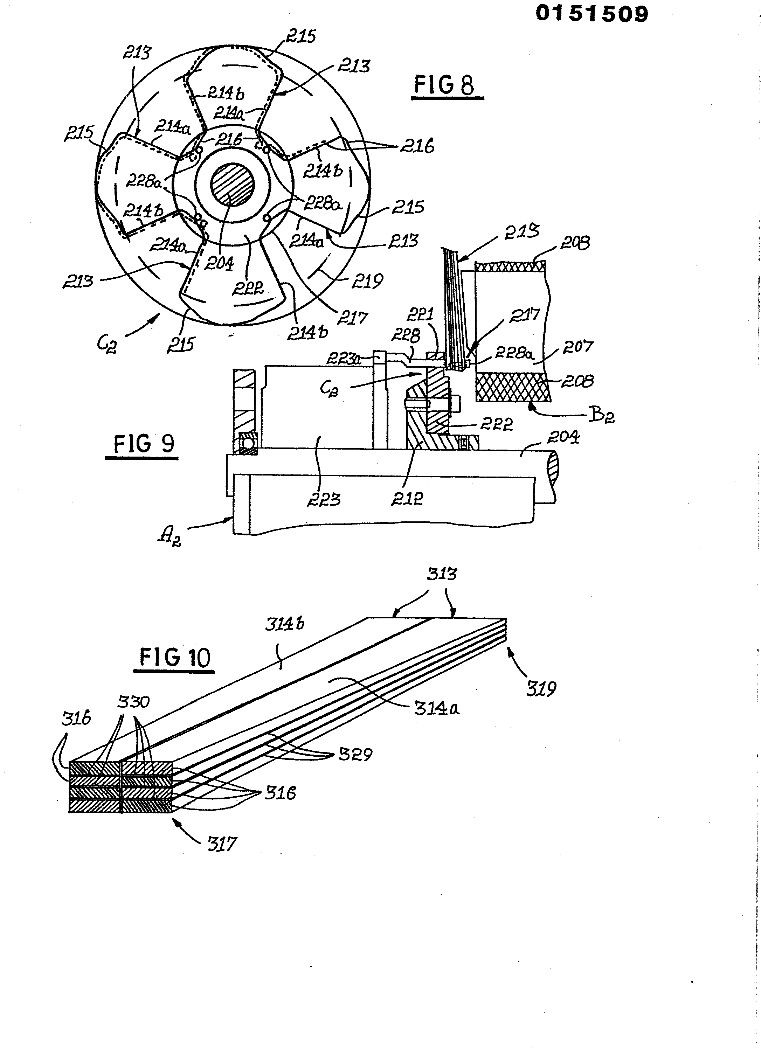

As shown in figure 7, the disc-like armature C1 may include an annular magnetic core 127 which extends continuously in a circumferential direction round the armature C1 and tapers in a radially inward direction. Preformed U-shaped coils 113 generally similar to the coils 13 of figures 1 to 6, are nested together over magnetic core 127 so that the one radially disposed active coil portion 114a of each U-shaped coil 113 is located on one side of magnetic core 127 and the other radially disposed active coil portion 114b of each coil 113 is located on the opposite side of magnetic core 127. In this manner each coil 113 straddles core 127 with the outer connecting portions 115 of the nesting coils 113 located at the wider outer periphery of core 127. The inner ends 120 of the outwardly tapering active coil portions 114a, 114b of the coils 113 are connected to a commutator (not shown) as described above. The radially inward taper of core 127 is related to the radially inward increase in the axial extent of the radially disposed active coil portions 114a, 114b so that the disc-like armature C1 has a substantially uniform thickness throughout the entire radial extent of airgap 111 and is substantially parallel-sided.

The magnetic faces 107a, 109a on each side of armature C1 are disposed substantially parallel to the corresponding side of armature C1 so that the opposing magnetic faces 107a, 109a of pole pieces 107 and flux ring 109 respectively are located in substantially parallel spaced relationship to one another to define an airgap 111 having a substantially uniform width throughout the entire radial extent of the airgap 111.

Instead of utilizing an electro-magnetic field system as described above, a permanent-magnet field system may be used. The material for permanent magnets is often expensive, such as in the case of samarium-cobalt, and it is believed that for a given power output significant material and cost saving may be obtained with permanent-magnet machines according to the invention.

The winding of a disc-like armature according to the invention may comprise U-shaped coils which are preformed individually. It is also possible for a succession of U-shaped coils to be wound in continuous fashion in any suitable manner. For example, as shown in figures 8 and 9, a relatively rigid conductor 228 is connected to each segment 223a of commutator 223 and extends axially from its commutator segment 223a through a passage 221 in the annular mounting disc 222 to present conductor ends 228a projecting in cantilever fashion from mounting disc 222. An elongate conductor 216 which has a substantially uniform round cross-sectional configuration and which has an insulating coating thereon, is wound continuously a suitable number of times round a plurality of circumferentially spaced projecting conductor ends 228a for the formation of a succession of U-shaped coils 213 as shown in figure 8, the conductor 216 being wound round suitable support or guide means (not shown) in the region of the circumferentially extending outer connecting portions 215 of coils 213. By suitable repetition of this procedure with different sets of circumferentially spaced projecting conductor ends 228a and using the same elongate conductor 216 or a plurality of different elongate conductors 216, a suitable number of turns of the elongate conductor/s 216 are wound round each of the projecting conductor ends 228a. At each projecting conductor end 228a each turn of the elongate conductor/s 216 passing round that projecting conductor end 228a, is electrically connected to that projecting conductor end 228a so that a plurality of U-shaped, single turn coils 213 of composite construction are formed. Each coil 213 in effect comprises a plurality of conductors.

Each coil 213 includes radially disposed active side portions 214a, 214b comprising a plurality of active conductor portions of round cross-sectional configuration which are juxtaposed to define coil side portions 214a, 214b of generally rectangular cross-sectional configuration, the sides of the rectangles extending substantially in circumferentially and axially disposed directions. The radially disposed coil side portions 214a, 214b are located side-by-side in edge-to-edge relationship and in close proximity to one another in substantially abutting relationship along substantially the entire radial extent of the coil side portions 214a, 214b between the outward zone 219 and the inward zone 217.

In order to accommodate the radially disposed active portions of the elongate conductor/s 216 in the coil side portions 214a, 214b as the latter radiate inwardly from the outer peripheral region 219 of the disc-like armature C2 towards the axis of the armature C2, at least certain of the radially disposed active conductor portions of each side portion 214a, 214b of each coil 213 are transposed into an axially superimposed relationship inwardly of outward zone 219 in a manner similar to that described above in relation to coils 13 of figures 1 to 6. Consequently, the circumferential extent of the rectangular cross-section of each of the coil side portions 214a, 214b decreases and the axial extent of the rectangular cross-section of each of the coil side portions 214a, 214b increases inwardly from outward zone 219 towards inward zone 217, whereby the overall extent in an axial direction of the radially disposed active conductor portions increases inwardly from the outer periphery of disc-like armature C2.

Instead of providing radially disposed coil side portions each comprising a plurality of juxtaposed and radially disposed active conductor portions of substantially uniform cross-sectional configuration which are transposed into an axially superimposed relationship inwardly from the outer periphery of the disc-like armature in order to provide coil side portions (i.e. groups of juxtaposed active conductor portions) having cross- sectional configurations which change in shape along their lengths, the active conductor portions themselves may have cross-sectional configurations which change in shape along their lengths.

As shown in figure 10, composite coils 313 are produced by printed circuit techniques and include radially disposed coil side portions 314a, 314b of laminated construction comprising a plurality of radially disposed active conductor portions 316 separated by insulation 329. Each active conductor portion 316 has a rectangular cross-sectional configuration with the sides of the rectangles extending substantially in circumferentially and axially disposed directions. The cross-sectional configuration of each active conductor portion 316 changes along its length such that its circumferential extent decreases and its axial extent increases from the radially outward zone 319 towards the radially inward zone 317 of the armature. Consequently, each composite, radially disposed coil side portion 314a, 314b (i.e. each group of active conductor portions 316) has a rectangular cross-sectional configuration which changes along its length such that its circumferential extent decreases and its axial extent increases from radially outward zone 319 towards radially inward zone 317.

In order to minimize eddy current losses, each composite radially disposed coil side portion 314a, 314b is laminated such that the interfaces 330 between adjacent active conductor portions 316 extend in a circumferential direction when viewed in section as shown in figure 10. Alternatively or additionally, each coil side portion 314a, 314b may be laminated to provide interfaces between adjacent active conductor portions which extend in an axial direction relative to disc-like armature $C_2$.

It will be seen that adjacent coil side portions 314a, 314b are located side-by-side in edge-to-edge relationship and in close proximity to one another in substantially abutting relationship along substantially the entire radial extent of the coil side portions 314a, 314b between the outward zone 319 and the inward zone 317. Stray load losses may thus be reduced to a minimum.

More variations in detail are possible. For example, composite coils similar to coils 313 of figure 10 which include radially disposed coil side portions 314a, 314b may be produced in any suitable manner other than by printed circuit techniques.

The pole pieces 7 and/or the annular flux ring 9 of figures 1 and 2 may be made of solid or laminated magnetic material.

The radially disposed conductors or conductor portions and the radially disposed coil portions need not lie precisely along a radius of the disc-like armature, but may have any suitable generally radial disposition.

## CLAIMS

1. An electric machine comprising a disc-like armature including a winding comprising substantially radially disposed conductors or conductor portions; and a magnetic field system adapted to produce a magnetic field, the disc-like armature and the magnetic field being relatively rotatable; characterized in that the substantially radially disposed conductors or conductor portions are located in close proximity to one another in a circumferential direction, at least certain of the radially disposed conductors or conductor portions and/or at least certain groups of the radially disposed conductors or conductor portions having cross-sectional configurations which change along their lengths such that their circumferential extent decreases and their axial extent increases from a radially outward zone of the armature towards a radially inward zone of the armature.

- 3 9 -                    0151509

2.     An electric machine as claimed in claim 1, characterized in that at least certain of the radially disposed conductors or conductor portions are transposed into an axially superimposed relationship inwardly from the outward zone of the disc-like armature, whereby the overall extent of radially disposed conductors or conductor portions in an axial direction increases inwardly from the outward zone of the armature.

3.     An electric machine as claimed in claim 1 or 2, characterized in that at least certain of the radially disposed conductors or conductor portions belonging to a group are transposed into an axially superimposed relationship inwardly from the outward zone of the armature, whereby the circumferential extent of the group of radially disposed conductors or conductor portions decreases and their axial extent increases from the outward zone towards the inward zone of the armature.

4.      An electric machine as claimed in claim 3, characterized in that the group of radially disposed conductors or conductor portions constitutes at least part of a coil of the armature winding.

5.      An electric machine as claimed in any one of the preceding claims, characterized in that radially disposed conductors or conductor portions are located side-by-side in substantially abutting relationship in a circumferential direction along substantially their entire radial extent.

6.      An electric machine as claimed in any one of the preceding claims, characterized in that the armature winding comprises a plurality of coils, each coil having a pair of circumferentially spaced, substantially radially disposed portions, at least certain of the radially disposed coil portions having cross-sectional configurations which change along their lengths such that their circumferential extent decreases and their axial extent increases from a radially outward zone of the armature towards a radially inward zone of the armature.

7. An electric machine as claimed in claim 6, characterized in that each coil comprises a plurality of juxtaposed conductors, at least certain of the conductors of each radially disposed coil portion being transposed into an axially superimposed relationship inwardly of the outward zone of the armature.

8. An electric machine as claimed in claim 7, characterized in that the juxtaposed conductors of each coil are of relatively small cross-sectional area, the number of juxtaposed conductors and the cross-sectional areas of the individual conductors being related to provide a predetermined total conductor cross-sectional area.

9. An electric machine as claimed in any one of claims 6 to 8, characterized in that the radially disposed portions of the coils have substantially rectangular cross-sectional configurations and' are located side-by-side in close proximity to one another in a circumferential direction along substantially the entire radial extent of the radially disposed coil portions.

10. An electric machine as claimed in claim 9 insofar as it is dependent on claim 7 or 8, characterized in that the juxtaposed conductors of each coil are of rounded cross-sectional configuration and are juxtaposed to define radially disposed coil portions of generally rectangular cross-sectional configuration.

11. An electric machine as claimed in claim 10, characterized in that the conductors of each radially disposed coil portion are juxtaposed in such manner that the sides of the rectangular cross-section extend substantially in circumferentially and axially disposed directions; and at least certain of the conductors of each radially disposed coil portion are transposed into an axially superimposed relationship inwardly of the outward zone of the armature, whereby the circumferential extent of the rectangular cross-section decreases and the axial extent of the rectangular cross-section increases inwardly from the outward zone of the armature.

12. An electric machine as claimed in any one of the preceding claims, characterized in that the disc-like armature is located in an airgap between a pair of opposed faces of magnetic material.

13. An electric machine as claimed in claim 12, characterized in that the magnetic face on each side of the disc is substantially parallel to the corresponding side of the disc.

14. An electric machine as claimed in claim 13, characterized in that the disc-like armature tapers in thickness in a radially outward direction and the width of the airgap decreases correspondingly in a radially outward direction.

15. An electric machine as claimed in claim 13, characterized in that the disc-like armature is substantially parallel sided and the opposed magnetic faces defining the airgap are also substantially parallel to each other.

0151509

16.  An electric machine as claimed in claim 15, characterized in that the disc-like armature comprises an annular magnetic core which tapers inwardly from an outward zone of the disc-like armature towards an inward zone of the disc-like armature; and radially disposed conductors or conductor portions are located in close proximity to another in a circumferential direction on each side of the annular core, the overall exent in an axial direction of the radially disposed conductors or conductor portions on at least one side of the annular core increasing inwardly from the outward zone of the armature towards the inward zone of the armature and the inward taper of the annular core being related to the radially inward increase in the axial extent of the conductors or conductor portions to provide a substantially parallel sided disc.

0151509

17.    A disc-like armature as defined in any one of the preceding claims.

FIG 1

0151509

0151509

## FIG 2

FIG 3

FIG 7

0151509

**FIG 4**

**FIG 5**

**FIG 6**

0151509

FIG 8

FIG 9

FIG 10

# 0151509

## EUROPEAN SEARCH REPORT

Application number

EP 85 30 0071

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 255 733 (CANADIAN GENERAL ELECTRIC) * Page 5, line 36 - page 13, line 6; figures 1-6 * | 1-15 | H 02 K 3/04 H 02 K 23/54 H 02 K 3/26 |
| Y | | 16 | |
| Y | DE-C- 20 461 (SHERIDAN) * Page 2, lines 43-48; figures 1,7 * | 16 | |
| X | CH-A- 521 041 (KUDELSKI) * Column 2, lines 20-31; figure * | 1-5,12 ,13,15 ,16 | |
| X | EP-A-0 096 415 (NIPPONDENSO) * Page 9, line 1 - page 13, line 3; figures 1-5 * | 1,4-6 9,12- 14 | TECHNICAL FIELDS SEARCHED (Int. Cl.4) H 02 K |
| X | FR-E- 86 784 (THOMSON-HOUSTON) * Page 2, left-hand column, line 10 - page 3, left-hand column, line 26; abstract; figures 2,6-9 * | 1,4-6 8,9,12 -14 | |

The present search report has been drawn up for all claims

| Place of search THE HAGUE | Date of completion of the search 11-04-1985 | Examiner TIO K.H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document